# EUROPEAN PATENT SPECIFICATION

(11) **EP 4 389 465 B1**
(45) Date of publication and mention of the grant of the patent: **19.02.2025**
(21) Application number: 23210936.3
(22) Date of filing: 20.11.2023
(51) Int. Cl.: B60C 19/00, B60C 13/02, B60C 15/06

(54) **HEAVY DUTY TIRE**
SCHWERLASTREIFEN
PNEU POUR POIDS LOURDS

(30) Priority: 22.12.2022 JP 2022205660
(43) Date of publication of application: 26.06.2024
(73) Proprietor: Sumitomo Rubber Industries, Ltd., Kobe-shi, Hyogo 651-0072 (JP)
(72) Inventor: UCHIDA, Akiko, Kobe-shi, 651-0072 (JP)
(74) Representative: Manitz Finsterwald Patent- und Rechtsanwaltspartnerschaft mbB

(56) References cited:
- EP-A1- 3 549 796
- FR-A1- 3 101 019
- JP-A- 2020 066 242

## Description

### BACKGROUND OF THE INVENTION

### Field of the Invention

The present invention relates to a heavy duty tire.

### Background Art

In order to manage data regarding manufacturing management, customer information, running history, etc., of tires, incorporation of radio frequency identification (RFID) tags into tires has been proposed. Various studies have been conducted for the technology to incorporate an RFID tag into a tire (for example, Japanese Laid-Open Patent Publication No. 2021-046057).

Also, a heavy duty tire in which a recess is provided in a zone of each tire side surface between a maximum width position of the tire and an end of a turned-up portion of a carcass ply in order to reduce the mass of the tire, has been known (for example, Japanese Laid-Open Patent Publication No. 2020-066242).

From the viewpoint of preventing damage, an RFID tag is provided in a portion of a tire where the degree of bending is small. In the case of a heavy duty tire, each bead portion has high stiffness. In the heavy duty tire, the bead portion is effective as a location for placing the RFID tag.

A tire includes a carcass extending on and between a pair of beads. The carcass includes a carcass ply. The carcass ply is turned up around the beads. In the case of a heavy duty tire, each turned-up portion of the carcass ply is placed such that an end thereof overlaps an apex of the bead.

The carcass ply includes a large number of carcass cords aligned with each other. In a heavy duty tire, steel cords are used as the carcass cords. If the RFID tag is placed near metal components such as steel cords, there is a concern that radio waves may be disturbed.

In the heavy duty tire, if the RFID tag is set in the bead portion, from the viewpoint of reducing the risk of damage and ensuring a distance from metal components, it is considered to place the RFID tag in a zone between the end of the turned-up portion and the end of the apex.

Meanwhile, in the above-described heavy duty tire having a shape in which a recess is provided, the recess is provided in a zone of each tire side surface between the maximum width position of the tire and the end of the turned-up portion. The zone on which the recess is provided has a degree of bending different from that of a general tire side surface. Therefore, even if an RFID tag is placed in the above-described zone between the end of the turned-up portion and the end of the apex, the risk of damage to the RFID tag cannot be sufficiently reduced in some cases. Further vehicle tires are known from the documents FR 3 101 019 Al and EP 3 549 796 Al, in which RFID tags are arranged in contact with the bead apex.

The present invention has been made in view of such circumstances. An object of the present invention is to provide a heavy duty tire that can achieve formation of a good communication environment and reduction of the risk of damage to an RFID tag while achieving mass reduction.

### SUMMARY OF THE INVENTION

A heavy duty tire according to the present invention includes: a pair of beads; a carcass extending on and between the pair of beads; a pair of sidewalls each located axially outward of the carcass; a pair of chafers each located radially inward of the sidewall and configured to come into contact with a rim; and a tag member including an RFID tag. Each of the beads includes a core, an inner apex located radially outward of the core, and an outer apex located radially outward of the inner apex. The carcass includes a carcass ply. The carcass ply includes a ply body extending between the pair of beads and a pair of turned-up portions each connected to the ply body and turned up around the bead. A recess is provided in a zone of a side surface of the tire between a maximum width position and an end of the turned-up portion. The tag member is in contact with the sidewall and the outer apex on a radially outer side of the end of the turned-up portion. At least a part of the tag member is located radially outward of a midpoint of a length from an inner end to an outer end of the recess.

According to the present invention, a heavy duty tire that can achieve formation of a good communication environment and reduction of the risk of damage while achieving mass reduction is obtained.

### BRIEF DESCRIPTION OF THE DRAWINGS

FIG. 1 is a cross-sectional view showing a part of a heavy duty tire according to one embodiment of the present invention;
FIG. 2 is a cross-sectional view showing a part of the tire in FIG. 1;
FIG. 3 is a plan view of a tag member;
FIG. 4 is a cross-sectional view taken along a line IV-IV in FIG. 3; and
FIG. 5 is a schematic diagram showing the results of analysis of strain by a FEM for the heavy duty tire having a shape in which a recess is provided.

### DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

In the present invention, a complex elastic modulus of a component formed from a crosslinked rubber, of the components included in the tire, is measured according to the standards of JIS K6394. The measurement conditions are as follows.
Initial strain = 10%
Dynamic strain = ±1%
Frequency = 10 Hz
Mode = stretch mode
Temperature = 70°C

In this measurement, a test piece (a length of 40 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the complex elastic modulus is represented as a complex elastic modulus at 70°C.

### [Outline of Embodiments of Present Invention]

### [Configuration 1]

A heavy duty tire according to one aspect of the present invention includes: a pair of beads; a carcass extending on and between the pair of beads; a pair of sidewalls each located axially outward of the carcass; a pair of chafers each located radially inward of the sidewall and configured to come into contact with a rim; and a tag member including an RFID tag, wherein each of the beads includes a core, an inner apex located radially outward of the core, and an outer apex located radially outward of the inner apex, the carcass includes a carcass ply, the carcass ply includes a ply body extending between the pair of beads and a pair of turned-up portions each connected to the ply body and turned up around the bead, a recess is provided in a zone of a side surface of the tire between a maximum width position and an end of the turned-up portion, the tag member is in contact with the sidewall and the outer apex on a radially outer side of the end of the turned-up portion, and at least a part of the tag member is located radially outward of a midpoint of a length from an inner end to an outer end of the recess.

The tire of Configuration 1 has a shape in which the recess is provided in the zone of the side surface of the tire between the maximum width position and the end of the turned-up portion. Accordingly, the tire weight is reduced as compared to a tire not having the recess.

In the tire of Configuration 1, the tag member is in contact with the sidewall and the outer apex. Therefore, the outer apex is located between the carcass ply and the RFID tag. Since the RFID tag is placed so as to be spaced apart from the carcass ply, even if the carcass ply includes steel cords as carcass cords, radio waves are less likely to be disturbed. In the tire, a good communication environment is formed between the RFID tag and a communication device (not shown). Writing of data to the RFID tag and reading of data recorded in the RFID tag are accurately performed.

In the tire of Configuration 1, at least a part of the tag member is placed so as to be located radially outward of the midpoint of the length from the inner end to the outer end of the recess. Accordingly, the tag member is placed at a position, between the sidewall and the outer apex, at which the influence of bending due to the recess is small. In the tire, the risk of damage to the RFID tag is reduced.

The tire of Configuration 1 can achieve formation of a good communication environment and reduction of the risk of damage to the RFID tag while achieving mass reduction.

### [Configuration 2]

Preferably, in the tire described in [Configuration 1] above, the RFID tag is located radially outward of the midpoint.

By forming the tire as in Configuration 2, the influence of bending due to the recess on the RFID tag is effectively suppressed. In the tire, the risk of damage is effectively reduced.

### [Configuration 3]

Preferably, in the tire described in [Configuration 1] or [Configuration 2] above, the midpoint is located between a radially outer side of an outer end of the chafer and a radially inner side of an outer end of the outer apex.

A radially inner region from the outer end of the chafer is a region where strain of the sidewall during inflation is large. The midpoint is a position where strain due to the recess is likely to occur. Therefore, when the midpoint is located radially outward of the outer end of the chafer, occurrence of large strain at the midpoint is reduced. In the tire having a shape in which a recess is provided, the rubber gauge of the sidewall near the midpoint becomes thinner. When the midpoint is located radially inward of the outer end of the outer apex, the sidewall near the midpoint can receive a reinforcement effect by the outer apex. Therefore, when the sidewall near the midpoint is subjected to external impact, occurrence of cracking or break of the carcass cords is reduced.

In the tire of Configuration 3, occurrence of large strain in the tag member and occurrence of damage to the tag member due to external impact are effectively suppressed.

### [Configuration 4]

Preferably, in the tire described in any one of [Configuration 1] to [Configuration 3] above, a shortest distance from a surface of the sidewall to the tag member is not less than 3.5 mm.

In the tire of Configuration 4, the tag member is sufficiently protected by the sidewall, so that occurrence of damage to the tag member is effectively suppressed.

### [Configuration 5]

Preferably, in the tire described in any one of [Configuration 1] to [Configuration 4] above, an outer end of the tag member is located radially outward of the outer end of the chafer.

The outer end of the chafer is located axially outward of the bead. The chafer extends radially outward from the rim side. The outer end of the chafer is a location where waving called creases is likely to occur in the manufacture of the tire. The tire of Configuration 5 allows the tag member to be placed at a position where interference with the outer end of the chafer is less likely to occur. In the tire, occurrence of creases is suppressed.

### [Configuration 6]

Preferably, in the tire described in [Configuration 5] above, the tag member is provided on a side of a first sidewall out of the pair of sidewalls. By forming the tire as described above, the number of tag members incorporated into the tire is reduced, so that occurrence of damage to the tag member is effectively suppressed.

### [Configuration 7]

Preferably, in the tire described in any one of [Configuration 1] to [Configuration 6] above, the tag member is a plate-shaped member in which the RFID tag is covered with a crosslinked rubber, and the tag member has a thickness of not less than 1.0 mm and not greater than 2.5 mm.

By forming the tire as described above, the risk of damage to the RFID tag is reduced, and a good communication environment is formed.

### [Details of Embodiments of Present Invention]

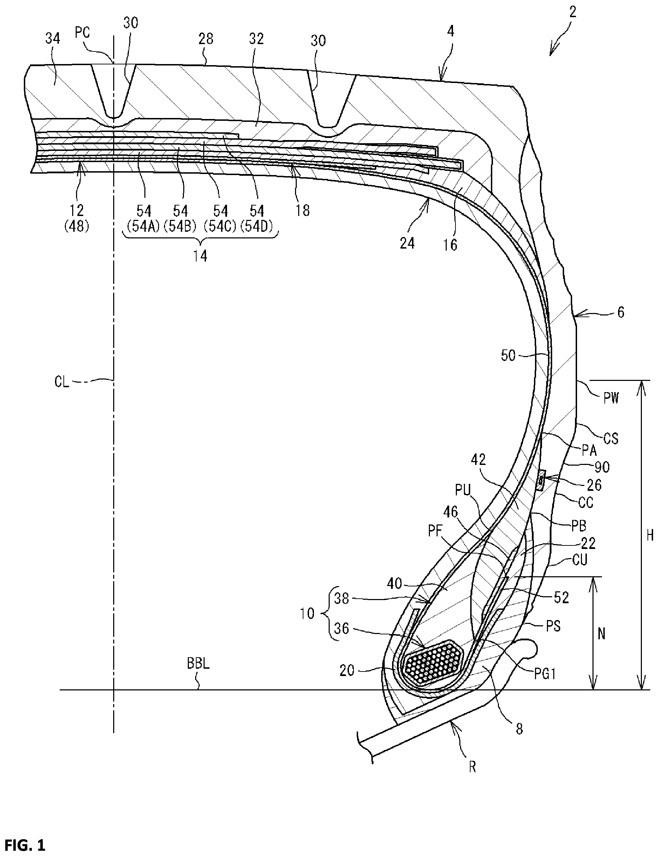

FIG. 1 shows a part of a heavy duty tire 2 (hereinafter, also referred to simply as "tire 2"), according to one embodiment of the present invention, having a shape in which a recess 90 is provided. The tire 2 is mounted to a vehicle such as a truck and a bus.

In FIG. 1, the tire 2 is fitted on a rim R (standardized rim).

FIG. 1 shows a part of a cross-section (hereinafter, meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2.

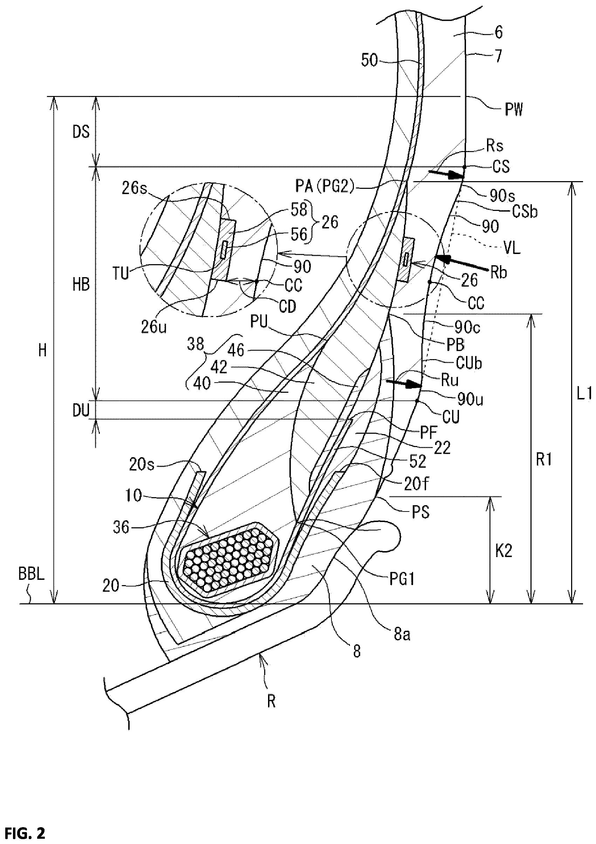

FIG. 2 shows a part of the cross-section shown in FIG. 1. FIG. 2 shows a bead portion of the tire 2.

In FIG. 1, an alternate long and short dash line CL extending in the radial direction represents the equator plane of the tire 2. In FIG. 1 and FIG. 2, a solid line BBL extending in the axial direction is a bead base line. The BBL is a line that defines the rim diameter (see JATMA or the like) of the rim R.

The tire 2 includes a tread 4, a pair of sidewalls 6, a pair of chafers 8, a pair of beads 10, a carcass 12, a belt 14, a pair of cushion layers 16, a strip layer 18, a pair of steel reinforcing layers 20, an interlayer strip 22, an inner liner 24, a tag member 26, and the recess 90.

The tread 4 is located radially outward of the carcass 12. The tread 4 comes into contact with a road surface at a tread surface 28 thereof. Grooves 30 are formed on the tread 4.

The tread 4 includes a base portion 32 and a cap portion 34 located radially outward of the base portion 32. The base portion 32 is formed from a crosslinked rubber that has low heat generation properties. The cap portion 34 is formed from a crosslinked rubber for which wear resistance and grip performance are taken into consideration. The cap portion 34 includes the tread surface 28.

In FIG. 1, a position indicated by reference character PC corresponds to an equator. The equator PC is the point of intersection of the tread surface 28 and the equator plane CL. In the case where the groove 30 is located on the equator plane CL as in the tire 2, the equator PC is specified on the basis of a virtual tread surface obtained on the assumption that the groove 30 is not present thereon.

The distance in the radial direction, from the BBL to the equator PC, obtained in the tire 2 in the standardized state is the cross-sectional height (see JATMA or the like) of the tire 2.

Each sidewall 6 is connected to an end of the tread 4. The sidewall 6 is located radially inward of the tread 4. The sidewall 6 is located axially outward of the carcass 12. A position indicated by reference character PS is an inner end of the sidewall 6. A surface 7 of the sidewall 6 forms a side surface of the tire 2. The sidewall 6 is formed from a crosslinked rubber for which cut resistance is taken into consideration. The complex elastic modulus of the sidewall 6 is not less than 2.0 MPa and not greater than 6.0 MPa.

A position indicated by reference character PW is an axially outer end (hereinafter, maximum width position PW) of the tire 2. In the case where decorations such as patterns and letters are present on the outer surface of the tire 2, the maximum width position PW is specified on the basis of a virtual outer surface obtained on the assumption that the decorations are not present thereon. The tire 2 has a maximum width at the maximum width position PW. The sidewall 6 has the recess 90 on the surface 7 on the radially inner side of the maximum width position PW.

The distance in the axial direction, from a first maximum width position PW to a second maximum width position PW (not shown), obtained in the tire 2 in the standardized state is the cross-sectional width (see JATMA or the like) of the tire 2.

In FIG. 1, a length indicated by reference character H is the distance in the radial direction from the BBL to the maximum width position PW. The distance H in the radial direction is also referred to as radial height of the maximum width position PW.

In the tire 2 in the standardized state, the ratio of the radial height H of the maximum width position PW to the cross-sectional height is not less than 0.40 and not greater than 0.60.

Each chafer 8 is located radially inward of the sidewall 6. The chafer 8 comes into contact with the rim R. The chafer 8 has a fitting portion 8a which comes into contact with the rim R. The fitting portion 8a enhances the adhesion between the tire 2 and the rim R. Accordingly, the movement of the bead 10 during running is effectively reduced, and the durability of the bead 10 is improved. A position indicated by reference character PB is an outer end of the chafer 8.

The chafer 8 is formed from a crosslinked rubber for which wear resistance is taken into consideration. The complex elastic modulus of the chafer 8 is not less than 10 MPa and not greater than 15 MPa. The chafer 8 is harder than the sidewall 6.

Each bead 10 is located axially inward of the chafer 8. The bead 10 is located radially inward of the sidewall 6. The bead 10 includes a core 36 and an apex 38 located radially outward of the core 36.

The core 36 extends in the circumferential direction. The core 36 includes a wound wire made of steel. The core 36 has a substantially hexagonal cross-sectional shape.

The apex 38 is located radially outward of the core 36. The apex 38 extends radially outward from the core 36. The apex 38 is tapered outward. An outer end PA of the apex 38 is located radially inward of the maximum width position PW. The outer end PA of the apex 38 is located radially outward of the outer end PB of the chafer 8.

The apex 38 includes an inner apex 40 and an outer apex 42. The inner apex 40 is located radially outward of the core 36. The outer apex 42 is located radially outward of the inner apex 40.

The inner apex 40 is tapered outward. The inner apex 40 is formed from a hard crosslinked rubber. The complex elastic modulus of the inner apex 40 is not less than 60 MPa and not greater than 90 MPa.

The outer apex 42 is thick around an outer end PU of the inner apex 40. The outer apex 42 is tapered inward and tapered outward from the thick portion thereof.

An inner end PG1 of the outer apex 42 is located near the core 36.

In FIG. 2, a length indicated by reference character L1 is the distance in the radial direction from the BBL to the outer end PG2 of the outer apex 42. The distance L1 in the radial direction is also referred to as radial height of the outer end PG2 of the outer apex 42. The outer end PG2 of the outer apex 42 is also the outer end PA of the apex 38. The distance L1 in the radial direction is also referred to as radial height of the bead 10. The outer end PG2 of the outer apex 42 is located axially outward of the carcass 12.

In the tire 2, from the viewpoint of well balancing the stiffness of the bead portion and bending of the tire 2, the ratio (L1/H) of the radial height L1 of the bead 10 to the radial height H of the maximum width position PW is adjusted in the range of not less than 0.55 and not greater than 0.95.

The outer apex 42 is formed from a crosslinked rubber. The outer apex 42 is more flexible than the inner apex 40. The complex elastic modulus of the outer apex 42 is not less than 3.0 MPa and not greater than 6.0 MPa.

The apex 38 of the tire 2 further includes an edge strip 46.

The edge strip 46 is located axially outward of the outer apex 42 and forms a part of the outer surface of the apex 38. The edge strip 46 is located between the outer end PB of the chafer 8 and the inner end PG1 of the outer apex 42.

The edge strip 46 is formed from a crosslinked rubber. The edge strip 46 is more flexible than the chafer 8 and is harder than the outer apex 42. The complex elastic modulus of the edge strip 46 is not less than 7.0 MPa and not greater than 12 MPa.

The carcass 12 is located inward of the tread 4, the pair of sidewalls 6, and the pair of chafers 8. The carcass 12 extends on and between the pair of beads 10. The carcass 12 of the tire 2 has a radial structure.

The carcass 12 includes at least one carcass ply 48. The carcass 12 of the tire 2 is composed of one carcass ply 48. The carcass ply 48 is turned up around the beads 10.

The carcass ply 48 has a ply body 50 and a pair of turned-up portions 52. The ply body 50 extends between the pair of beads 10, that is, between a first bead 10 and a second bead 10. Each turned-up portion 52 is connected to the ply body 50 and turned up around the bead 10. The turned-up portion 52 of the tire 2 is turned up around the bead 10 from the inner side toward the outer side in the axial direction. An end PF of the turned-up portion 52 is located radially inward of the outer end PB of the chafer 8. The bead 10 is interposed between the ply body 50 and the turned-up portion 52. The end PF of the turned-up portion 52 is located radially outward of an inner end PS of the sidewall 6.

The carcass ply 48 includes a large number of carcass cords aligned with each other, which are not shown. These carcass cords are covered with a topping rubber. Each carcass cord intersects the equator plane CL. Steel cords are used as the carcass cords of the tire 2.

In FIG. 1, a length indicated by reference character N is the distance in the radial direction from the BBL to the end PF of the turned-up portion 52. The distance N in the radial direction is also referred to as radial height of the end PF of the turned-up portion 52.

In the tire 2, the ratio (N/H) of the radial height N of the end PF of the turned-up portion 52 to the radial height H of the maximum width position PW is not less than 0.25 and not greater than 0.45.

The belt 14 includes four belt plies 54. The four belt plies 54 are a first belt ply 54A, a second belt ply 54B, a third belt ply 54C, and a fourth belt ply 54D. These belt plies 54 are aligned in the radial direction.

In the tire 2, the second belt ply 54B has a largest width, and the fourth belt ply 54D has a smallest width.

Each belt ply 54 includes a large number of belt cords aligned with each other, which are not shown. Each belt cord is tilted relative to the equator plane CL. Steel cords are used as the belt cords of the tire 2.

Each cushion layer 16 is located between the belt 14 and the carcass 12 at the end of the belt 14. The cushion layer 16 is formed from a flexible crosslinked rubber.

The strip layer 18 is located between the carcass 12 and the belt 14 on the radially inner side of the tread 4. In the axial direction, the strip layer 18 is located between a first cushion layer 16 and a second cushion layer 16. The strip layer 18 is formed from a crosslinked rubber.

Each steel reinforcing layer 20 is located in the bead portion. The steel reinforcing layer 20 is located between the chafer 8 and the carcass 12. The steel reinforcing layer 20 is located between the chafer 8 and the turned-up portion 52. The steel reinforcing layer 20 is turned up around the bead 10. The steel reinforcing layer 20 includes a large number of filler cords aligned with each other, which are not shown. The material of the filler cords is steel.

A first end 20f of the steel reinforcing layer 20 is located between the chafer 8 and the turned-up portion 52 in the axial direction. The first end 20f is located radially inward of the end PF of the turned-up portion 52. A second end 20s of the steel reinforcing layer 20 is located between the inner liner 24 and the ply body 50 in the axial direction. It is sufficient that the position in the radial direction of the second end 20s substantially coincides with that of the first end 20f, and the second end 20s may be located radially outward of the first end 20f or may be located radially inward of the first end 20f.

Each interlayer strip 22 is located between the chafer 8 and the apex 38 of the bead 10 in the axial direction. The interlayer strip 22 covers the end PF of the turned-up portion 52 and the first end 20f of the steel reinforcing layer 20.

The interlayer strip 22 is in contact with the apex 38 on the radially outer side of the end PF of the turned-up portion 52. In other words, the contact surface between the interlayer strip 22 and the apex 38 forms a part of the outer surface of the apex 38.

The interlayer strip 22 is in contact with the chafer 8 on the radially outer side of the first end 20f of the steel reinforcing layer 20. In other words, the contact surface between the interlayer strip 22 and the chafer 8 forms a part of the inner surface of the chafer 8.

The interlayer strip 22 is formed from a crosslinked rubber. The interlayer strip 22 is harder than the sidewall 6 and is more flexible than the chafer 8. The complex elastic modulus of the interlayer strip 22 is not less than 7.0 MPa and not greater than 12 MPa.

The inner liner 24 is located inward of the carcass 12. The inner liner 24 is joined to the inner surface of the carcass 12 via an insulation (not shown) formed from a crosslinked rubber. The inner liner 24 forms an inner surface of the tire 2. The inner liner 24 is formed from a crosslinked rubber that has an excellent air blocking property.

As described above, the tire 2 is a tire having a shape in which the recess 90 is provided. More specifically, in the tire 2, the recess 90 is provided on the surface 7 of the sidewall 6. As shown in FIG. 2, the recess 90 has a shape that projects inward. The recess 90 extends uninterruptedly in the circumferential direction.

In FIG. 2, reference character CS indicates an outer end of the recess 90. Reference character CU indicates an inner end of the recess 90. In the tire 2, the outer end CS of the recess 90 is located between the outer end PA of the apex 38 and the maximum width position PW in the radial direction. The inner end CU of the recess 90 is located between the end PF of the turned-up portion 52 and the outer end PB of the chafer 8 in the radial direction. In the tire 2, the recess 90 is provided in a zone of the surface 7 between the maximum width position PW and the end PF of the turned-up portion 52. The recess 90 contributes to reducing the mass of the tire 2.

In FIG. 2, reference character CC indicates the midpoint of the length from the inner end CU to the outer end CS of the recess 90. In the tire 2, the midpoint CC is located between the radially outer side of the outer end PB of the chafer 8 and the radially inner side of the outer end PA of the apex 38. The midpoint CC is a position where strain is likely to occur. A radially inner region from the outer end PB of the chafer 8 is a region where strain of the sidewall 6 during inflation is large. In the tire 2, since the midpoint CC is located radially outward of the outer end PB of the chafer 8, occurrence of large strain is suppressed. In addition, in the tire 2, since the midpoint CC is located radially inward of the outer end PA of the apex 38, a reinforcement effect by the apex 38 is obtained.

The tag member 26 is located axially outward of the bead 10. In the tire 2, the tag member 26 is provided only on the side of a first sidewall 6. The tag member 26 may be provided on each of the side of the first sidewall 6 and the side of a second sidewall 6. From the viewpoint of reducing occurrence of damage to the tag member 26, the tag member 26 is preferably provided on the side of the first sidewall 6 out of the pair of sidewalls 6.

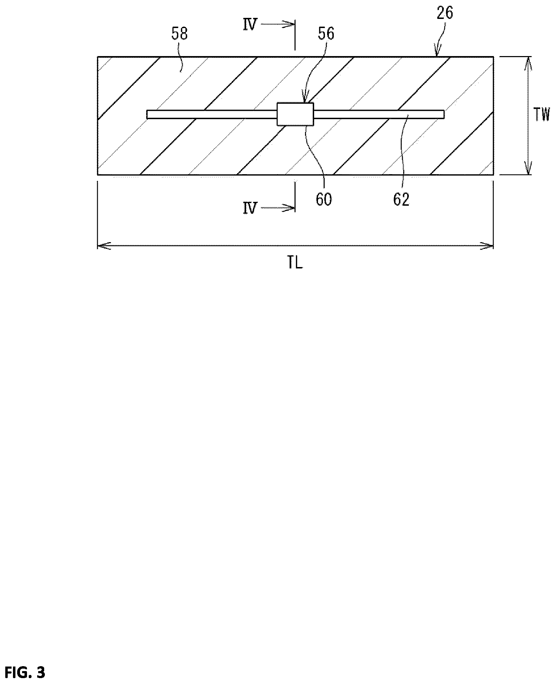

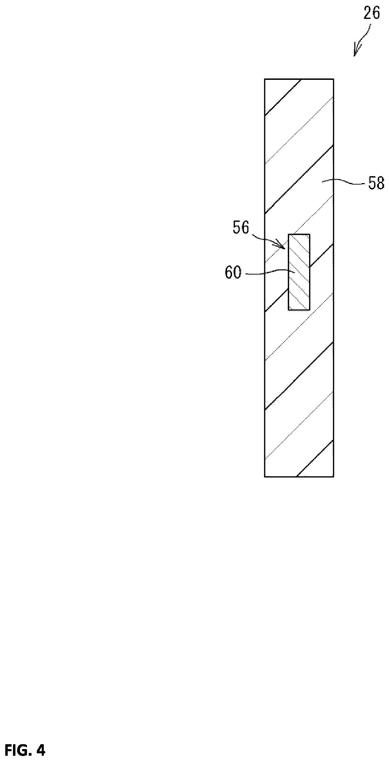

FIG. 3 is a plan view of the tag member 26. FIG. 4 is a cross-sectional view taken along a line IV-IV in FIG. 3.

The tag member 26 has a plate shape. The tag member 26 is long in a length direction thereof and short in a width direction thereof. As shown in FIG. 2, in the tire 2, the tag member 26 is placed such that a first end 26s in the width direction thereof is located on the radially outer side in the tire 2 and a second end 26u in the width direction thereof is located on the radially inner side in the tire 2.

The tag member 26 includes an RFID tag 56. In FIG. 3, for convenience of description, the RFID tag 56 is shown by a solid line, but the entirety thereof is covered with a protector 58. The tag member 26 includes the RFID tag 56 and the protector 58. The RFID tag 56 is located at the center of the tag member 26. The protector 58 is formed from a crosslinked rubber. The protector 58 has stiffness substantially equal to the stiffness of the outer apex 42. In the tire 2, formation of a good communication environment is considered, and a crosslinked rubber having high electrical resistance is used for the protector 58. The protector 58 is formed from a rubber that has high insulation properties.

Although not described in detail, the RFID tag 56 is a small and lightweight electronic component that includes: a semiconductor chip 60 obtained by making a transmitter/receiver circuit, a control circuit, a memory, etc., into a chip; and an antenna 62. Upon receiving interrogation radio waves, the RFID tag 56 uses the radio waves as electrical energy and transmits various data in the memory as response radio waves. The RFID tag 56 is a type of passive radio frequency identification transponder.

In the tire 2, the tag member 26 is a plate-shaped member in which the RFID tag 56 is covered with a crosslinked rubber. From the viewpoint of reducing the risk of damage to the RFID tag 56 and forming a good communication environment, the thickness of the tag member 26 in the tire 2 is preferably not less than 1.0 mm and not greater than 2.5 mm. The thickness of the tag member 26 in the tire 2 is represented as the maximum thickness of the tag member 26 at the semiconductor chip 60 of the RFID tag 56.

A length TL of the tag member 26 before embedding in the tire 2 is not less than 60 mm and not greater than 80 mm. A width TW thereof is not less than 10 mm and not greater than 20 mm.

The position of the RFID tag 56 in the tire 2 is represented as the position of a radially inner end of the RFID tag 56 (specifically, the semiconductor chip 60) in the meridian cross-section of the tire 2. In FIG. 2, a position indicated by reference character TU is the radially inner end of the RFID tag 56 as the position of the RFID tag 56 in the tire 2.

In the tire 2, the tag member 26 is located axially outward of the outer apex 42 on the radially outer side of the end PF of the turned-up portion 52. The tag member 26 is in contact with the sidewall 6 and the outer apex 42. In other words, the tag member 26 is present at the boundary between the sidewall 6 and the outer apex 42. In the tire 2, the outer apex 42 is harder than the sidewall 6. The boundary between the tag member 26 and the outer apex 42 forms a part of the outer surface of the outer apex 42. In other words, the boundary between the tag member 26 and the outer apex 42 forms a part of the outer surface of the apex 38. The tag member 26 is located on the side of the sidewall 6 which is more flexible than the outer apex 42. The tag member 26 forms a part of the boundary between the outer apex 42 and the sidewall 6.

The second end 26u of the tag member 26 is located at substantially the same position in the radial direction as the midpoint CC of the recess 90. Therefore, in the tire 2, the entire tag member 26 is configured to be placed radially outward of the midpoint CC. In the present invention, the entire tag member 26 is preferably located radially outward of the midpoint CC, but is not limited thereto. In the present invention, at least a part of the tag member 26 only has to be located radially outward of the midpoint CC. That is, the midpoint CC may be located between the first end 26s and the second end 26u of the tag member 26 in the radial direction. Accordingly, in the tire 2, the tag member 26 is placed in the bead portion where the degree of bending is small. From the viewpoint of effective strain reduction of the tag member 26, the second end 26u of the tag member 26 is preferably located between the outer end PG2 of the outer apex 42 and the midpoint CC in the radial direction. Accordingly, the entire tag member 26 is configured to be placed radially outward of the midpoint CC.

In the tire 2, the RFID tag 56 is located radially outward of the midpoint CC in the radial direction. More specifically, a radially inner end TU of the RFID tag 56 is located between the outer end PG2 of the outer apex 42 and the midpoint CC in the radial direction. In the tire 2, the degree of bending is small between the outer end PG2 and the midpoint CC. In the tire 2, the risk of damage to the RFID tag 56 is effectively reduced.

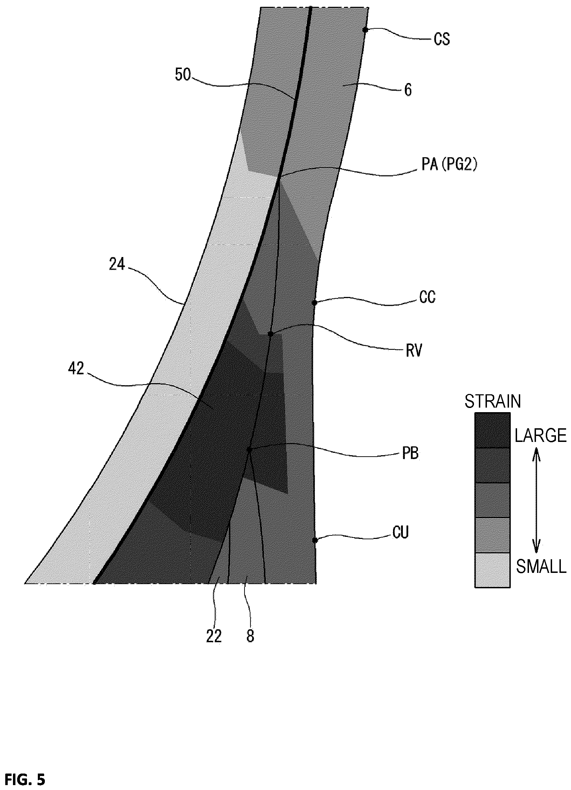

FIG. 5 is a schematic diagram showing the results of analysis of strain by a finite element method (FEM) for the heavy duty tire 2 (tire size = 275/80R22.5) having a shape in which the recess 90 is provided. In this analysis, the size of a rim on which the tire was fitted was 22.5×7.50. The internal pressure of the tire was set to 900 kPa. A load applied to the tire was set to 33.83 kN.

In the results of analysis of strain by the FEM shown in FIG. 5, the magnitude of strain is represented by colors as shown in the lower right corner of FIG. 5. The darker the color, the larger the strain, and the lighter the color, the smaller the strain. In FIG. 5, reference character RV is a position where a change in the degree of strain occurs at the boundary between the apex 38 and the sidewall 6.

From FIG. 5, it can be seen that as for the strain from the outer end PG2 of the outer apex 42 to the position RV, the strain at the boundary between the outer apex 42 and the sidewall 6 is smaller than the strain from the outer end PB of the chafer 8 to the position RV. It can be seen that the midpoint CC is located outward of the position RV in the radial direction. It can be seen that the strain at the boundary between the outer apex 42 and the sidewall 6 is continuously small on the outer side with respect to the midpoint CC in the radial direction.

Therefore, from the results of analysis by the FEM, the following is suggested in the tire 2:
the strain of the tag member 26 can be reduced when the entire tag member 26 is located radially outward of the position RV;
the strain of the tag member 26 can be effectively reduced when the entire tag member 26 is located radially outward of the midpoint CC;
the risk of damage to the RFID tag 56 can be reduced when the radially inner end TU of the RFID tag 56 is located radially outward of the position RV; and
the risk of damage to the RFID tag 56 can be effectively reduced when the radially inner end TU of the RFID tag 56 is located radially outward of the midpoint CC.

In the tire 2, the outer apex 42 is located between the carcass ply 48 and the RFID tag 56. The RFID tag 56 is placed so as to be spaced apart from the carcass ply 48 including the carcass cords which are metal components. Radio waves are less likely to be disturbed, so that a good communication environment is formed between the RFID tag 56 and a communication device (not shown). Writing of data to the RFID tag 56 and reading of data recorded in the RFID tag 56 are accurately performed.

The tire 2 can achieve formation of a good communication environment and reduction of the risk of damage to the RFID tag 56 while achieving mass reduction.

Meanwhile, the outer end PB of the chafer 8 is located axially outward of the bead 10. The chafer 8 is a component extending radially outward from the rim R side. The outer end PB of the chafer 8 is a location where waving called creases is likely to occur in the manufacture of the tire 2. Since the tag member 26 is placed near the outer end PB of the chafer 8, there is a concern that creases may occur depending on the degree of interference between the outer end PB of the chafer 8 and the tag member 26.

In the tire 2, the second end 26u of the tag member 26 is located radially outward of the outer end PB of the chafer 8. Accordingly, the entirety of the tag member 26 is placed radially outward of the outer end PB of the chafer 8. Interference between the tag member 26 and the outer end PB of the chafer 8 is effectively suppressed. In the tire 2, occurrence of creases is effectively suppressed. From this viewpoint, in the tire 2, the second end 26u of the tag member 26 is preferably located radially outward of the outer end PB of the chafer 8.

In the tire 2, the first end 26s of the tag member 26 is located radially inward of the outer end PG2 of the outer apex 42. Accordingly, the influence of the tag member 26 on bending of the sidewall portion is effectively suppressed. With the tire 2, good durability and ride comfort are maintained. From this viewpoint, the first end 26s of the tag member 26 is preferably located radially inward of the outer end PG2 of the outer apex 42.

In the tire 2, the outer end PU of the inner apex 40 is located between the end PF of the turned-up portion 52 and the RFID tag 56 in the radial direction. Accordingly, the hard inner apex 40 effectively increases the stiffness of the bead portion. Strain applied to the RFID tag 56 is effectively reduced. The tire 2 can effectively reduce the risk of damage to the RFID tag 56. From the viewpoint of being able to further effectively reduce the risk of damage to the RFID tag 56, more preferably, the outer end PU of the inner apex 40 is located between the end PF of the turned-up portion 52 and the RFID tag 56 in the radial direction, and further, the outer end PU of the inner apex 40 is located between the end PF of the turned-up portion 52 and the outer end PB of the chafer 8 in the radial direction.

In the tire 2, the outer end PB of the chafer 8 is located radially outward of the inner end PS of the sidewall 6, and the sidewall 6 covers the outer end PB of the chafer 8. Since the outer end PB of the chafer 8 is covered with the sidewall 6, strain applied to the outer end PB is effectively alleviated. In the tire 2, the chafer 8 is harder than the sidewall 6. Therefore, by covering the outer end PB of the chafer 8 with the sidewall 6, strain applied to the outer end PB is more effectively alleviated. In the tire 2, occurrence of damage starting from the outer end PB of the chafer 8 is effectively suppressed.

In FIG. 2, a double-headed arrow DU indicates the distance in the radial direction from the end PF of the turned-up portion 52 to the inner end CU of the recess 90. A double-headed arrow DS indicates the distance in the radial direction from the maximum width position PW to the outer end CS of the recess 90. The distance DU is preferably not less than 10 mm and preferably not greater than 20 mm. The distance DS is preferably not less than 10 mm and preferably not greater than 20 mm. When the distance DU is not less than 10 mm, the bead durability is maintained. When the distance DS is not less than 10 mm, good cut resistance is maintained. When the distance DU and the distance DS are not greater than 20 mm, a recess 90 having a sufficient size can be ensured, so that the mass of the tire 2 is effectively reduced.

In the tire 2, a radially inner portion of the side surface 7 from the maximum width position PW includes the above-described recess 90, an outer portion 7a extending radially outward from the outer end CS of the recess 90, and an inner portion 7b extending radially inward from the inner end CU of the recess 90.

In FIG. 2, a dotted line VL represents a virtual side surface obtained on the assumption that there is no recess 90 on the side surface 7. The virtual side surface VL is located between the outer portion 7a and the inner portion 7b. The outer end CS of the recess 90 is the boundary between the outer portion 7a and the virtual side surface VL. The inner end CU of the recess 90 is the boundary between the inner portion 7b and the virtual side surface VL.

In the tire 2, the recess 90 includes a bottom portion 90c, an outer boundary portion 90s, and an inner boundary portion 90u.

The outer boundary portion 90s extends between the bottom portion 90c and the above-described outer portion 7a. The profile of the outer boundary portion 90s is tangent to the profile of the outer portion 7a at the outer end CS. The outer end CS is also the boundary between the outer boundary portion 90s and the outer portion 7a.

The inner boundary portion 90u extends between the bottom portion 90c and the above-described inner portion 7b. The profile of the inner boundary portion 90u is tangent to the profile of the inner portion 7b at the inner end CU. The inner end CU is also the boundary between the inner boundary portion 90u and the inner portion 7b.

In FIG. 2, reference character CSb indicates an outer end of the bottom portion 90c. Reference character CUb indicates an inner end of the bottom portion 90c. In the tire 2, the outer boundary portion 90s is located radially outward of the bottom portion 90c. The profile of the bottom portion 90c is tangent to the profile of the outer boundary portion 90s at the outer end CSb. The outer end CSb is the boundary between the bottom portion 90c and the outer boundary portion 90s. The inner boundary portion 90u is located radially inward of the bottom portion 90c. The profile of the bottom portion 90c is tangent to the profile of the inner boundary portion 90u at the inner end CUb. The inner end CUb is the boundary between the bottom portion 90c and the inner boundary portion 90u. The recess 90 of the tire 2 has the profile of the bottom portion 90c, the profile of the outer boundary portion 90s, and the profile of the inner boundary portion 90u.

In the cross-section of the tire 2 shown in FIG. 2, the profile of the outer boundary portion 90s and the profile of the inner boundary portion 90u are represented by outwardly convex arcs. In FIG. 2, an arrow Rs indicates the radius of the arc representing the profile of the outer boundary portion 90s. An arrow Ru indicates the radius of the arc representing the profile of the inner boundary portion 90u.

In the tire 2, the radius Rs and the radius Ru are preferably not less than 40 mm. Accordingly, concentration of strain on the outer boundary portion 90s and the inner boundary portion 90u is suppressed. The upper limits of the radius Rs and the radius Ru are determined as appropriate in consideration of the configuration of the recess 90.

In the tire 2, the profile of the bottom portion 90c is represented by an inwardly convex arc. Therefore, a force applied to the bottom portion 90c is effectively distributed over the entire bottom portion 90c. In the tire 2, occurrence of damage such as cracking due to concentration of strain on a particular part of the bottom portion 90c is prevented.

In FIG. 2, an arrow Rb indicates the radius of the arc representing the profile of the bottom portion 90c. In the tire 2, the radius Rb is determined as appropriate in consideration of the above-described distance DU in the radial direction from the end PF of the turned-up portion 52 to the inner end CU of the recess 90, the above-described distance DS in the radial direction from the maximum width position PW to the outer end CS of the recess 90, the radius Rs of the arc representing the profile of the outer boundary portion 90s, and the radius Ru of the arc representing the profile of the inner boundary portion 90u. From the viewpoint of preventing damage due to concentration of stress on the bottom portion 90c, the radius Rb is preferably not less than 40 mm.

In FIG. 2, a double-headed arrow H indicates the distance in the radial direction from the BBL to the maximum width position PW. A double-headed arrow HB indicates the distance in the radial direction from the inner end CU to the outer end CS of the recess 90. In the tire 2, the ratio of the distance HB in the radial direction to the distance H in the radial direction is preferably not less than 0.45 and preferably not greater than 0.65. When this ratio is set to be not less than 0.45, the size of the recess 90 is sufficiently ensured, so that the mass of the tire 2 can be effectively reduced. From this viewpoint, this ratio is more preferably not less than 0.50. When this ratio is set to be not greater than 0.65, the size of the recess 90 is appropriately maintained. In the tire 2, the influence of the recess 90 on stiffness is effectively suppressed. From this viewpoint, this ratio is more preferably not greater than 0.60.

In FIG. 2, a double-headed arrow CD indicates the shortest distance from the surface 7 of the sidewall 6 to the tag member 26. In the tire 2, the distance from the midpoint CC to the tag member 26 is the shortest distance CD. The shortest distance CD is preferably not less than 3.5 mm and preferably not greater than 7.0 mm. When the shortest distance CD is not less than 3.5 mm, the strength of the sidewall 6 can be ensured. In addition, external impact to the RFID tag 56 is reduced by the sidewall 6. In the tire 2, the risk of damage to the RFID tag 56 is effectively reduced. When the shortest distance CD is not greater than 7.0 mm, a recess 90 having a sufficient size can be ensured, so that the mass of the tire 2 can be effectively reduced.

In FIG. 2, a length indicated by reference character R1 is the distance in the radial direction from the BBL to the outer end PB of the chafer 8. The distance R1 in the radial direction is also referred to as radial height of the outer end PB of the chafer 8.

In FIG. 2, a length indicated by reference character K2 is the distance in the radial direction from the BBL to the inner end PS of the sidewall 6. The distance K2 in the radial direction is also referred to as radial height of the inner end PS of the sidewall 6.

In the tire 2, the ratio (R1/K2) of the radial height R1 of the outer end PB of the chafer 8 to the radial height K2 of the inner end PS of the sidewall 6 is not less than 2.00 and not greater than 3.25.

When the ratio (R1/K2) is set to be not less than 2.00, a region where the sidewall 6 and the chafer 8 are joined together can be sufficiently ensured. In the tire 2, occurrence of creases is effectively suppressed. From this viewpoint, the ratio (R1/K2) is more preferably not less than 2.20.

When the ratio (R1/K2) is set to be not greater than 3.25, a space for placing the tag member 26 is ensured. The tire 2 allows the tag member 26 to be placed at a position at which interference with the outer end PB of the chafer 8 is less likely to occur. In the tire 2, occurrence of creases is suppressed. From this viewpoint, the ratio (R1/K2) is more preferably not greater than 3.00.

In the tire 2, the ratio (L1/R1) of the radial height L1 of the outer end PG2 of the outer apex 42 to the radial height R1 of the outer end PB of the chafer 8 is preferably not less than 1.08 and not greater than 1.54.

When the ratio (L1/R1) is set to be not less than 1.08, a space for placing the tag member 26 is ensured. The tire 2 allows the tag member 26 to be placed at a position at which interference with the outer end PB of the chafer 8 is less likely to occur. In the tire 2, occurrence of creases is suppressed. From this viewpoint, the ratio (L1/R1) is more preferably not less than 1.12.

When the ratio (L1/R1) is set to be not greater than 1.54, the influence of the outer apex 42 on bending of the tire 2 is suppressed. With the tire 2, good ride comfort is maintained. From this viewpoint, the ratio (L1/R1) is more preferably not greater than 1.42.

As is obvious from the above description, according to the present invention, the heavy duty tire 2 that can achieve formation of a good communication environment and reduction of the risk of damage to the RFID tag 56 while achieving mass reduction, is obtained.

The above-described technology capable of achieving formation of a good communication environment and reduction of the risk of damage to an RFID tag while achieving mass reduction can be applied to various tires.

## Claims

1. A heavy duty tire (2) comprising:
a pair of beads (10);
a carcass (12) extending on and between the pair of beads (10);
a pair of sidewalls (6) each located axially outward of the carcass (12);
a pair of chafers (8) each located radially inward of the sidewall (6) and configured to come into contact with a rim (R); wherein
each of the beads (10) includes a core (36), an inner apex (40) located radially outward of the core (36), and an outer apex (42) located radially outward of the inner apex (40),
the carcass (12) includes a carcass ply (48),
the carcass ply (48) includes a ply body (50) extending between the pair of beads (10) and a pair of turned-up portions (52) each connected to the ply body (50) and turned up around the bead (10),
a recess (90) is provided in a zone of a side surface of the tire (2) between a maximum width position (PW) and an end (PF) of the turned-up portion (52),
the heavy duty tire (2) being **characterized by** a tag member (26) including an RFID tag (56), wherein the tag member (26) is in contact with the sidewall (6) and the outer apex (42) on a radially outer side of the end (PF) of the turned-up portion (52), and
at least a part of the tag member (26) is located radially outward of a midpoint (CC) of a length from an inner end (CU) to an outer end (CS) of the recess (90).

2. The heavy duty tire (2) according to claim 1, wherein the RFID tag (56) is located radially outward of the midpoint (CC).

3. The heavy duty tire (2) according to claim 1 or 2, wherein the midpoint (CC) is located between a radially outer side of an outer end (PB) of the chafer (8) and a radially inner side of an outer end (PG2) of the outer apex (42).

4. The heavy duty tire (2) according to any one of claims 1 to 3, wherein a shortest distance (CD) from a surface (7) of the sidewall (6) to the tag member (26) is not less than 3.5 mm.

5. The heavy duty tire (2) according to any one of claims 1 to 4, wherein an outer end (26s) of the tag member (26) is located radially outward of the outer end (PB) of the chafer (8).

6. The heavy duty tire (2) according to claim 5, wherein the tag member (26) is provided on a side of a first sidewall (6) out of the pair of sidewalls (6).

7. The heavy duty tire (2) according to any one of claims 1 to 6, wherein
the tag member (26) is a plate-shaped member in which the RFID tag (56) is covered with a crosslinked rubber, and
the tag member (26) has a thickness of not less than 1.0 mm and not greater than 2.5 mm.

## Patentansprüche

1. Schwerlastreifen (2), umfassend:
ein Paar Wülste (10);
eine Karkasse (12), die sich auf und zwischen dem Paar Wülsten (10) erstreckt;
ein Paar Seitenwände (6), die jeweils axial außen von der Karkasse (12) angeordnet sind;
ein Paar Wulstschutzbänder (8), die jeweils radial innen von der Seitenwand (6) angeordnet und konfiguriert sind, um mit einer Felge (R) in Kontakt zu kommen;
wobei
jeder der Wülste (10) einen Kern (36), einen inneren Kernreiter (40), der radial außen von dem Kern (36) angeordnet ist, und einen äußeren Kernreiter (42), der radial außen von dem inneren Kernreiter (40) angeordnet ist, umfasst,
die Karkasse (12) eine Karkasslage (48) umfasst,
die Karkasslage (48) einen Lagenkörper (50), der sich zwischen dem Paar Wülsten (10) erstreckt, und ein Paar Umschlagabschnitte (52), die jeweils mit dem Lagenkörper (50) verbunden und um den Wulst (10) umgeschlagen sind, umfasst,
eine Aussparung (90) in einem Bereich einer Seitenfläche des Reifens (2) zwischen einer Position maximaler Breite (PW) und einem Ende (PF) des Umschlagabschnitts (52) vorgesehen ist,
wobei der Schwerlastreifen (2) durch ein Tag-Element (26) gekennzeichnet ist, das ein RFID-Tag (56) umfasst, wobei das Tag-Element (26) mit der Seitenwand (6) und dem äußeren Kernreiter (42) auf einer radial äußeren Seite des Endes (PF) des Umschlagabschnitts (52) in Kontakt ist, und
wobei mindestens ein Teil des Tag-Elements (26) radial außen von einem Mittelpunkt (CC) einer Länge von einem inneren Ende (CU) zu einem äußeren Ende (CS) der Aussparung (90) angeordnet ist.

2. Schwerlastreifen (2) nach Anspruch 1, wobei das RFID-Tag (56) radial außen von dem Mittelpunkt (CC) angeordnet ist.

3. Schwerlastreifen (2) nach Anspruch 1 oder 2, wobei der Mittelpunkt (CC) zwischen einer radial äußeren Seite eines äußeren Endes (PB) des Wulstschutzbandes (8) und einer radial inneren Seite eines äußeren Endes (PG2) des äußeren Kernreiters (42) angeordnet ist.

4. Schwerlastreifen (2) nach einem der Ansprüche 1 bis 3, wobei ein kürzester Abstand (CD) von einer Oberfläche (7) der Seitenwand (6) zu dem Tag-Element (26) nicht weniger als 3,5 mm beträgt.

5. Schwerlastreifen (2) nach einem der Ansprüche 1 bis 4, wobei ein äußeres Ende (26s) des Tag-Elements (26) radial außen von dem äußeren Ende (PB) des Wulstschutzbandes (8) angeordnet ist.

6. Schwerlastreifen (2) nach Anspruch 5, wobei das Tag-Element (26) auf einer Seite einer ersten Seitenwand (6) aus dem Paar von Seitenwänden (6) vorgesehen ist.

7. Schwerlastreifen (2) nach einem der Ansprüche 1 bis 6, wobei
das Tag-Element (26) ein plattenförmiges Element ist, in dem das RFID-Tag (56) mit einem vernetzten Kautschuk bedeckt ist, und
das Tag-Element (26) eine Dicke von nicht weniger als 1,0 mm und nicht mehr als 2,5 mm aufweist.

## Revendications

1. Pneumatique pour service intensif (2) comprenant :
une paire de talons (10) ;
une carcasse (12) s'étendant sur et entre la paire de talons (10) ;
une paire de parois latérales (6), chacune étant située axialement à l'extérieur de la carcasse (12) ;
une paire de bandelettes de talon (8), chacune étant située radialement à l'intérieur de la paroi latérale (6) et configurée pour venir en contact avec une jante (R) ;
chacun des talons (10) inclut une âme (36), un sommet intérieur (40) situé radialement à l'extérieur de l'âme (36), et un sommet extérieur (42) situé radialement à l'extérieur du sommet intérieur (40),
la carcasse (12) inclut une nappe de carcasse (48),
la nappe de carcasse (48) inclut un corps de nappe (50) s'étendant entre la paire de talons (10) et une paire de portions retroussées (52), chacune étant connectée au corps de nappe (50) et retroussée autour du talon (10),
un évidement (90) est prévu dans une zone sur une surface latérale du pneumatique (2) entre une position de largeur maximum (PW) et une extrémité (PF) de la portion retroussée (52),
le pneumatique pour service intensif (2) étant **caractérisé par** un élément d'étiquette (26) incluant une étiquette RFID (56), dans lequel
l'élément d'étiquette (26) est en contact avec la paroi latérale (6) et le sommet extérieur (42) sur un côté radialement extérieur de l'extrémité (PF) de la portion retroussée (52), et
au moins une partie de l'élément d'étiquette (26) est située radialement à l'extérieur d'un point médian (CC) d'une longueur depuis une extrémité intérieure (CU) jusqu'à une extrémité extérieure (CS) de l'évidement (90).

2. Pneumatique pour service intensif (2) selon la revendication 1, dans lequel l'étiquette RFID (56) est située radialement à l'extérieur du point médian (CC).

3. Pneumatique pour service intensif (2) selon la revendication 1 ou 2, dans lequel le point médian (CC) est situé entre un côté radialement extérieur d'une extrémité extérieure (PB) de la bandelette de talon (8) et un côté radialement intérieur d'une extrémité extérieure (PG2) du sommet extérieur (42).

4. Pneumatique pour service intensif (2) selon l'une quelconque des revendications 1 à 3, dans lequel une distance la plus courte (CD) depuis une surface (7) de la paroi latérale (6) jusqu'à l'élément d'étiquette (26) n'est pas inférieure à 3,5 mm.

5. Pneumatique pour service intensif (2) selon l'une quelconque des revendications 1 à 4, dans lequel une extrémité extérieure (26s) de l'élément d'étiquette (26) est située radialement à l'extérieur de l'extrémité extérieure (PB) de la bandelette de talon (8).

6. Pneumatique pour service intensif (2) selon la revendication 5, dans lequel l'élément d'étiquette (26) est prévu sur un côté d'une première paroi latérale (6) parmi la paire de parois latérales (6).

7. Pneumatique pour service intensif (2) selon l'une quelconque des revendications 1 à 6, dans lequel
l'élément d'étiquette (26) est un élément en forme de plaque dans lequel l'étiquette RFID (56) est recouverte d'un caoutchouc réticulé, et
l'élément d'étiquette (26) a une épaisseur qui n'est pas inférieure à 1,0 mm et qui n'est pas supérieure à 2,5 mm.
